# EUROPÄISCHE PATENTSCHRIFT

(11) **EP 4 149 751 B1**
(45) Veröffentlichungstag und Bekanntmachung des Hinweises auf die Patenterteilung: **12.02.2025**
(21) Anmeldenummer: 21721034.3
(22) Anmeldetag: 20.04.2021
(51) Int. Cl.: B32B 5/02, B32B 5/06, B32B 5/26, D04H 1/732, D04H 1/76, D04H 1/492, D04H 1/498

(54) **ANLAGE ZUR HERSTELLUNG EINES MEHRLAGIGEN VLIESES UND VERFAHREN ZUR HERSTELLUNG EINES VLIESES**
APPARATUS FOR PRODUCING A MULTI-LAYER NONWOVEN AND METHOD FOR PRODUCING A NONWOVEN
SYSTÈME DE PRODUCTION D'UN NON-TISSÉ MULTICOUCHE ET PROCÉDÉ DE PRODUCTION D'UN NON-TISSÉ

(30) Priorität: 14.05.2020 DE 102020113137
(43) Veröffentlichungstag der Anmeldung: 22.03.2023
(73) Patentinhaber: Trützschler Group SE, 41199 Mönchengladbach (DE); Voith Patent GmbH, 89522 Heidenheim (DE)
(72) Erfinder: WEIGERT, Thomas, 65843 Sulzbach (DE); PÖHLER, Kai, 52391 Vettweiss (DE); SCHRÖDER, Ralf, 63225 Langen (DE); SCHILZ, Andreas, 52076 Aachen (DE)
(86) Internationale Anmeldenummer: PCT/EP2021/060233
(87) Internationale Veröffentlichungsnummer: WO 2021/228514

(56) Entgegenhaltungen:
- EP-A2- 1 748 101
- EP-A2- 1 905 877
- EP-B1- 0 992 338
- WO-A1-2009/130174
- WO-A1-2012/150902
- WO-A1-96/34136
- WO-A1-99/22059
- WO-A2-01/53588
- US-A- 3 291 682
- US-A1- 2002 157 766

## Beschreibung

Die Erfindung betrifft eine Anlage und ein Verfahren zur Herstellung eines ein- oder mehrlagigen Vlieses nach dem Oberbegriff von Anspruch 1, 2 und 5.

Nach dem Stand der Technik ist es bekannt, zwischen zwei kardierten Vliesen eine lose Schicht Fasern, wie beispielsweise Pulp, anzuordnen und mittels Wasserstrahlen zu verfestigen. Eine Anlage und ein Verfahren dieser Art werden beispielsweise in der EP 0992338 B1 beschrieben. Die lose Schicht Fasern kann mittels Nasslegeverfahren, Meltblown oder Airlaid erzeugt und abgelegt werden. Von Nachteil ist die geringe Festigkeit des mehrschichtigen Vlieses, die nach der Wasserstrahlverfestigung fast ausschließlich auf der Festigkeit des kardierten Vlieses beruht. Ein weiterer Nachteil des Airlaid-Verfahren ist, dass keine Fasern unterschiedlicher Länge oder unterschiedlicher Zusammensetzung verarbeitet werden können.

Die WO01/53588 A2 offenbart eine Anlage zum trockenen Aufbringen von Pulp auf einer kalandrierten Schicht Spinnvlies oder einer Lage Krempelvlies. Beides wird wasserstrahlverfestigt, getrocknet und ggfs. noch einmal kalandriert.

In der EP 1748101 A2 wird eine Schicht Spinnvlies erzeugt, die kalandriert wird und darauf eine Lage Pulp trocken aufgebracht wird. Eine weitere Deckschicht von Spinnvlies wird aufgebracht und alles zusammen Wasserstrahlverfestigt, getrocknet und ggfs. noch einmal kalandriert. Das Aufbringen der Pulpfasern erfolgt im Trockenverfahren. Die Verwendung von Wetlaid-Fasern wird nur als Deckschicht genannt.

Die WO99/22059 offenbart ein Verfahren zur Herstellung von Papier, u.a. für Geldscheine. Nach dem Aufbringen einer Schicht Spinnvlies erfolgt die Aufbringung einer Schicht Fasern im Nassverfahren (foamforming) bzw. Schaum-Formierungsverfahren.Beides wird zusammen Wasserstrahlverfestigt.

Die PCT2009/130174 A1 und US 3,291,682 offenbaren den konstruktiven Aufbau eines Rundsiebzylinders für die Herstellung von Papier.

In der EP 1905877 B1 offenbart die Verwendung eines Rundsiebformers zur Herstellung eines Vlieses. Die Faserbildung erfolgt auf einem Drahtförderband bzw. mittels eines besaugten Zylinders.

Das Aufbringen von kurzen Fasern mittels Airlaid hat den Nachteil, dass die Kurzfasern nur mit erhöhtem Aufwand, z.B. mittels Bindemittel, wasserstrahlvernadelt werden können, so dass ein biologisch abbaubares Produkt nur mit hohem Aufwand herstellbar ist. Die Verwendung eines Schrägsiebformes zur Herstellung einer nassgelegten Lage Kurzfasern benötigt sehr viel Bauraum, einen hohen Wasserverbrauch und ist sehr teuer von den Investitionskosten.

Entsprechend liegt der Erfindung die Aufgabe zugrunde, eine Anlage und ein Verfahren zur Herstellung eines ein- oder mehrlagigen Vlies dahingehend weiterzubilden, dass die Anlage platzsparend aufgebaut und kostengünstig betrieben werden kann. Weiterhin soll die Anlage ausgebildet sein, ein ein- oder mehrlagiges Vlies herzustellen, das vorzugsweise biologisch abbaubar ist.

Die Erfindung wird durch die Merkmale der Ansprüche 1, 2 und 5 gelöst.

Die erfindungsgemäße Anlage zur Herstellung eines mehrlagigen Vlieses umfasst mindestens eine Vorrichtung zum Herstellen und/oder Ablegen eines ersten Vlieses auf einem umlaufenden Band, wobei in Materialtransportrichtung nachfolgend eine Vorrichtung angeordnet ist, die ausgebildet ist, eine Lage nassgelegter Fasern auf dem ersten Vlies aufzubringen. In Materialtransportrichtung nachgeordnet ist eine Vorrichtung zur Verfestigung und/oder Verbindung des ersten Vlieses mit der Lage nassgelegter Fasern vorgesehen, wobei zwischen den Ablagepunkten des ersten Vlieses auf dem umlaufenden Band und dem Ablagepunkt der Lage nassgelegter Fasern auf dem ersten Vlies der Abstand I maximal 10 m beträgt. Die erfindungsgemäße Anlage ist sehr kurz gebaut und kann mit geringen Invetitions- und Betriebskosten angeschafft und betrieben werden.

Dabei ist die Vorrichtung zur Herstellung der nassgelegten Fasern als Rundsiebformer ausgebildet, die als kompakte Vorrichtung zwischen einer Vorrichtung zum Herstellen und/oder Ablegen eines ersten Vlieses und einer Verfestigungsstation integrierbar ist. Dabei werden die nassgelegten Fasern mit ihrer Oberseite vom umlaufenden Band in Richtung umlaufendes Band transportiert. Dadurch ergibt sich eine sehr kurze Baulänge der Anlage, die in bestehende Anlagen auch nachträglich integriert werden kann, da nur ein Transportband vom Rundsiebformer zum Band der Anlage benötigt wird.

Bei einem dreilagigen Vlies umfasst die erfindungsgemäße Anlage mindestens eine Vorrichtung zum Herstellen und/oder Ablegen eines ersten Vlieses auf einem umlaufenden Band, wobei nachfolgend in Materialtransportrichtung eine weitere Vorrichtung zum Herstellen und/oder Ablegen eines weiteres Vlieses auf einem umlaufenden Band angeordnet ist. Zwischen diesen beiden Vorrichtungen ist eine Vorrichtung zur Herstellung einer Lage nassgelegter Fasern angeordnet, die zwischen dem ersten und dem weiteren Vlies auf einem umlaufenden Band abgelegt werden. Erfindungsgemäß beträgt der Abstand L zwischen dem Ablagepunkt des ersten Vlieses auf dem umlaufenden Band und dem Ablagepunkt des zweiten Vlieses auf der Lage nassgelegter Fasern maximal 25 m.

Dabei ist die Vorrichtung zur Herstellung der nassgelegten Fasern als Rundsiebformer ausgebildet, die als kompakte Vorrichtung zwischen zwei Vorrichtungen zum Herstellen und/oder Ablegen eines Vlieses integriert werden kann. Dabei werden die nassgelegten Fasern mit ihrer Oberseite vom umlaufenden Band in Richtung umlaufendes Band transportiert, wodurch sich eine sehr kurze Baulänge der Anlage ergibt. Dadurch ergibt sich eine sehr kurze Baulänge der Anlage, die in bestehende Anlagen auch nachträglich integriert werden kann, da nur ein Transportband vom Rundsiebformer zum Band der Anlage benötigt wird.

Vorzugsweise sind die Vorrichtungen zur Herstellung des ersten Vlieses und/oder des zweiten Vlieses als Krempel ausgebildet, wobei die Vliese der Krempeln auf das umlaufende Band und/oder auf die Lage nassgelegter Fasern aufbringbar ist.

Alternativ können die Vorrichtungen zur Herstellung des ersten Vlieses und/oder des zweiten Vlieses als Spinnvliesanlage ausgebildet sein, wobei die Vliese aus endlosen Fasern auf das umlaufende Band und/oder auf die Lage nassgelegter Fasern aufbringbar ist.

In einer alternativen Ausführungsform ist eine Vorrichtung zur Herstellung des ersten Vlieses und/oder des zweiten Vlieses als Abwickelstation ausgebildet, die das Vlies auf das umlaufende Band und/oder auf die Lage nassgelegter Fasern aufbringen kann. Das Vlies der Abwickelstationen kann als Krempelvlies, als vorgefertigtes Vlies einer beliebigen Fasermischung, als Vlies aus Endlosfilamenten oder aus Stapelfasern bestehen.

Ebenso sind beliebige Kombinationen der Vorrichtung zur Herstellung einer Lage nassgelegter Fasern mit einer Krempel, einer Abwickelstation und/oder einer Spinnvliesanlage möglich.

Nach dem erfindungsgemäßen Verfahren zur Herstellung eines Vlieses wird eine Faserstoffsuspension auf einem rotierenden Zylinder abgelegt, der ausgebildet ist, zumindest einen Teil der Flüssigkeit der Faserstoffsuspension abzuziehen, so dass eine Lage nassgelegter Fasern entsteht, die an der Oberseite mittels eines umlaufenden Bandes erfasst und an ein weiteres umlaufendes Band übergeben wird, wobei die Lage nassgelegter Fasern verfestigt und getrocknet wird. Mit dem erfindungsgemäßen Verfahren kann eine sehr dünne und leichte Schicht nassgelegter Fasern hergestellt werden, die besonders gleichmäßig hinsichtlich Flächengewicht und Materialverteilung ist, da durch den Herstellprozess beide Seiten (Oberseite, Unterseite) geglättet aus dem Rundsiebformer geliefert werden. Die Lage nassgelegter Fasern kann ohne weitere Verarbeitung alleine oder in Kombination mit einem oder mehreren Vliesen verfestigt und/oder getrocknet werden.

Insbesondere für sehr kurze Fasern (1 bis 3 mm, vorzugsweise 1 bis 12 mm durchschnittliche Faserlänge), die biologisch abbaubar sind, eignet sich das Verfahren. Mit dem erfindungsgemäßen Verfahren lassen sich mit einer Geschwindigkeit bis zu 400 m/min dünne Lagen nassgelegter Fasern mit einer Breite von bis zu 5 m herstellen, die ein sehr gleichmäßiges Flächengewicht aufweisen.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigen:
- Figur 1:: ein erstes Ausführungsbeispiel einer erfindungsgemäßen Anlage;
- Figur 2:: eine vergrößerte Darstellung des Rundsiebformer;
- Figur 2a:: eine vergrößerte Darstellung auf den Zylinder eines Rundsiebformers;
- Figur 3:: ein weiteres Ausführungsbeispiel einer erfindungsgemäßen Anlage;
- Figur 4:: ein weiteres Ausführungsbeispiel einer erfindungsgemäßen Anlage;
- Figur 5:: ein weiteres Ausführungsbeispiel eines Rundsiebformer;
- Figur 6:: ein weiteres Ausführungsbeispiel eines Rundsiebformers;
- Figur 7:: ein weiteres Ausführungsbeispiel eines Rundsiebformers.

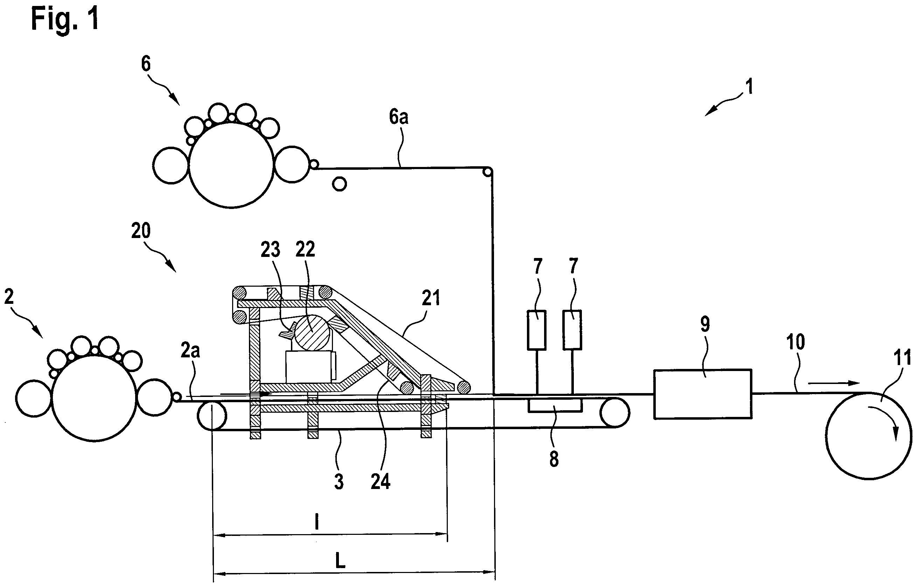

Figur 1 zeigt eine Anlage 1, bei der eine erste Krempel 2 ein kardiertes Vlies 2a auf einem umlaufenden Band 3 ablegt. Das kardierte Vlies 2a kann aus Fasern aus Viskose mit beispielsweise 1,7 den und 40 mm Faserlänge bestehen. Nachfolgend ist ein Rundsiebformer 20 angeordnet der ausgebildet ist, eine Schicht nassgelegter Fasern 24 zu erzeugen. Dem Rundsiebformer 20 kann in Transportrichtung eine weitere Krempel 6 nachgeordnet sein, die ebenfalls ausgebildet ist, ein kardiertes Vlies 6a herzustellen. In Transportrichtung nachfolgend sind zumindest eine Wasserstrahlverfestigung 7 und ein Trockner 9 angeordnet. Die Anlage 1 ist ausgebildet, variabel nur eine Schicht nassgelegter Fasern 24, ein Vlies 2a mit einer Schicht nassgelegter Fasern 24 oder ein Vlies 2a mit einer Schicht nassgelegter Fasern 24 und einem weiteren Vlies 6a herzustellen.

Ein Rundsiebformer 20 erzeugt eine Schicht nassgelegte Fasern 24 und legt diese auf einem umlaufenden Band 3 ab. Dazu weist der Rundsiebformer 20 einen Stoffauflauf 23 auf, durch den mittels einer Leitung eine Faserstoffsuspension, beispielsweise aus Pulp, auf einen angetriebenen drehenden Zylinder 22 abgelegt wird. Vorzugsweise kann der drehende Zylinder 22 einen perforierten Mantel mit einer Vielzahl von Löchern aufweisen, der von innen besaugt werden kann. Mittels einer ortsfesten Saugvorrichtung im drehenden Zylinder 22 kann das Wasser zum größten Teil aus der Faserstoffsuspension abgezogen werden. Die damit auf dem Zylinder 22 abgelegten nassen Fasern 24 werden mit ihrer Oberseite durch ein umlaufendes Band 21 abtransportiert, das vorzugsweise als Siebband ausgebildet sein kann. Die Oberseite der nassen Fasern 24 wird durch eine Seite des Bandes 21 gehalten und abtransportiert, die in diesem Ausführungsbeispiel nach unten gerichtet ist und damit mit der Schwerkraft die nassen Fasern 24 auf dem umlaufenden Band 3 ablegt. Es entsteht ein einlagiges Vlies, das verfestigt, getrocknet und aufgewickelt einer Weiterverarbeitung zugeführt werden kann. Vorzugsweise kann die Lage aus nassgelegten Fasern 24 vor der Verfestigung mit einem Binder behandelt werden.

Vorzugsweise weist die Anlage 1 mindestens eine Vorrichtung zur Herstellung eines kardierten Vlieses auf, die in Transportrichtung vor dem Rundsiebformer 20 angeordnet ist. Die Vorrichtung kann als Krempel 2 ausgebildet sein. In diesem Fall wird die Lage aus nassgelegten Fasern 24 auf dem Vlies 2a der Krempel 2 abgelegt. Es entsteht ein zweilagiges Vlies, umfassend eine Lage kardiertes Vlies 2a mit einer Lage nassgelegter Fasern 24, die miteinander verfestigt, getrocknet und als Vlies 10 weiterverarbeitet oder mittels eines Wicklers 11 aufgewickelt werden.

Optional können über eine weitere Krempel 6 die nassgelegten Fasern 24 durch ein weiteres kardiertes Vlies 6a abgedeckt werden, so dass die nassgelegten Fasern 24 beidseitig durch ein Vlies 2a, 6a gekammert werden. Das kardierte Vlies 6a kann ebenfalls beispielsweise aus Viskose mit 1,7 den und 40 mm Faserlänge bestehen. Die drei Schichten können nachfolgend miteinander verfestigt, getrocknet und als Vlies 10 weiterverarbeitet oder mittels eines Wicklers 11 aufgewickelt werden. Die Darstellung der Krempel 6 oberhalb des Rundsiebformers ist nur schematisch dargestellt. Tatsächlich werden die Anlagenkomponenten 2, 20 und 6 in Transportrichtung nachfolgend angeordnet. Auch die Darstellung der Ablage der Vliese 2a, 6a auf einem oder mehreren umlaufenden Bändern 3 ist nur schematisch dargestellt. Üblicherweise erfolgt die Ablage der kardierten Vliese von der Krempel in einem leichten Winkel von oberhalb des oder der Transportbänder. Das in der Erfindung benannte umlaufende Band 3 schränkt die Anzahl der umlaufenden Bänder, mit denen die nassgelegten Fasern 24 und/oder kardierten Vliese 2a, 6a nicht ein. Es können auch mehrere umlaufende Bänder verwendet werden.

Allen drei Varianten gemeinsam kann die Wasserstrahlverfestigung 7 ein- oder mehrstufig bei einem Druck von 40 - 400 bar betreibbar sein wobei unterhalb des umlaufenden Bandes 3 eine Absaugvorrichtung 8 angeordnet sein kann, mit der das Wasser der Wasserstrahlverfestigung 7 abgesaugt wird. Das verfestigte mehrschichtige Vlies durchläuft anschließend einen Trockner 9, der als Trommeltrockner oder Bandtrockner ausgebildet sein kann. Nach dem Trocknen kann das ein- oder mehrlagige Vlies 10 auf einem Wickler 11 aufgewickelt werden. Ein Vorteil der erfindungsgemäßen Anlage 1 liegt in dem geringen Platzbedarf für die Herstellung eines ein- oder mehrlagigen Vlieses, der gleichmäßigen Verteilung der nassgelegten Fasern 24 über die Breite des entstehenden Vlieses, so wie in der möglichen Verwendung von Sekundärfasern, Regeneratfasern und/oder Recyclefasern, so dass ein biologisch abbaubares Vlies erzeugbar ist. Ein weiterer Vorteil liegt darin, dass die Anlage nur mit einer Schicht nassgelegter Fasern 24, oder mit zwei Schichten (2a und 24) oder (24 und 6a) oder mit drei Schichten (2a und 24 und 6a) von Fasern bzw. Vliesen betrieben werden kann und bei ihrer Kompaktheit und den geringen Investitionskosten sehr günstig zu betreiben ist.

Der Abstand L zwischen den Auflagepunkten, an denen die Vliese 2a und 6a auf einem oder mehrere Bänder 3 aufgelegt werden und zwischen denen die Schicht aus nassgelegten Fasern 24 aufgebracht wird, beträgt maximal 25 m. Der Abstand I, zwischen dem Auflagepunkt eines Vlieses 2a auf einem oder mehreren Bändern 3 und dem in Transportrichtung nachfolgenden Punkt, an dem die nassgelegten Fasern 24 auf dem Vlies 2a aufgelegt wird, beträgt maximal 10 m. Es wird damit eine kurze und kompakte Anlage geschaffen, die durch die Verwendung eines klassischen Schrägsiebformers nicht zu erreichen ist.

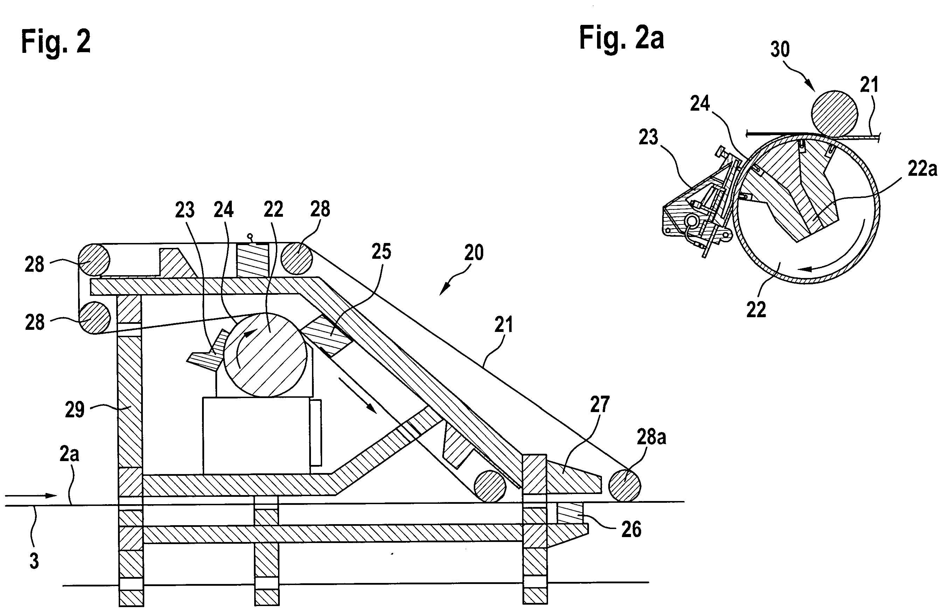

Figur 2 zeigt eine vergrößerte Darstellung einer ersten Ausführungsform des Rundsiebformers 20, bei dem eine Faserstoffsuspension mittels Stoffauflauf 23 auf einem angetriebenen drehenden Zylinder 22 abgelegt wird. Der Zylinder 22 kann vorzugsweise einen perforierten Mantel aufweisen und darüber das Wasser der Faserstoffsuspension abführen. Hierzu kann der gesamte Zylinder 22 unter leichtem Unterdruck stehen und einen Abfluss für das abgeführte Wasser aufweisen. Ergänzend kann der Zylinder 22 auch zumindest in dem Teilbereich auf dem Umfang besaugt werden, auf dem das Band 21 aufliegt, was in der Ausführungsform der Figur 2a näher beschrieben ist. Alternativ kann eine nicht dargestellte Absaugung oberhalb des Zylinders 22 angeordnet sein, die das Wasser der Faserstoffsuspension durch das umlaufende Band 21 absaugt. Vorzugsweise kann die Absaugung innerhalb und/oder außerhalb des Zylinders 22 über einen Teilumfang segmentweise in der Stärke variiert werden. Der Zylinder 22 oder das umlaufende Band 21 können mit einer oder mehrerer nicht dargestellten Gautschwalzen zusammenwirken, die für eine weitere Entwässerung und Kompaktierung der nassgelegten Fasern 24 sorgen. Das umlaufende Band 21, das als Siebband ausgebildet sein kann, wird um mehrere Umlenkrollen 28 geführt und liegt mit einer äußeren Seite auf einem Teilumfang des Zylinders 22 mit Spannung auf, so dass das Wasser aus der Faserstoffsuspension gepresst wird. Mindestens eine Umlenkrolle 28 kann als Spannrolle ausgeführt werden, mit dem sich das umlaufende Band 21 spannen lässt. Der Zylinder 22 und das Band 21 drehen bzw. bewegen sich vorzugsweise mit der gleichen Geschwindigkeit. Ein Abnehmer 25 kann auf der inneren Seite des Bandes 21 in dem Bereich angeordnet sein, bei dem sich das Band 21 vom Zylinder 22 löst. Der Abnehmer 25 kann als Saugkammer ausgebildet sein, so dass mit einem Unterdruck die Fasern 24 am Band 21 verbleiben und vom Zylinder 22 abgenommen werden. Die Fasern 24 werden damit kopfüber mit ihrer Oberseite vom Band 21 in Richtung umlaufendes Band 3 transportiert, auf dem wiederum das Vlies 2a aufliegen kann. Im Bereich der Übergabe der Fasern 24 auf das Vlies 2a kann am Rundsiebformer 20 ein Trennsauger 26 angeordnet sein, mit dem die Fasern vom Band 21 mittels Saugluft abgelöst werden. Der Trennsauger 26 ist dabei unterhalb des umlaufenden Bandes 3 angeordnet und kann - falls vorhanden - gleichzeitig das Vlies 2a durchströmen. Auf der Gegenseite des Bandes 21, also auf der Innenseite des Bandes 21, kann zur Verstärkung des Ablöseeffektes der Fasern 24 vom Band 21 eine Druckvorrichtung 27 angeordnet sein, die mittels Luft- oder Wasserdruck die Fasern 24 vom Band 21 ablösen. Vorzugsweise ist eine Umlenkrolle 28a ausgebildet, in der Position verstellt zu werden, so dass im Übergabebereich der nassgelegten Fasern 24 auf das Vlies 2a zwischen den Bändern 3 und 21 in Transportrichtung ein offener Winkel entsteht, mit dem die Ablösung der nassgelegten Fasern 24 vom Band 21 unterstützt wird.

Eine Optimierung der Qualität der nassgelegten Fasern 24 kann am Stoffauflauf 23 durch eine Verdünnungswasserregelung erzielt werden, wodurch sich das Querprofil der nassgelegten Fasern 24 noch weiter vergleichmäßigen lässt. Bei einer Arbeitsbreite der Anlage von bis zu 5 m kann insbesondere bei einer dünnen und leichten Schichten aus nassgelegten Fasern der Querschnitt dadurch gleichmäßiger werden. Eine weitere Verbesserung kann durch eine Stoffauflaufheizung erreicht werden, mit der ebenfalls das Querschnittsprofil der nassgelegten Fasern 24 ebenfalls weiter verbessert werden kann. Mittels einer Randabsaugung kann der Rand der nassgelegten Fasern scharfkantiger gestaltet werden.

Der Rundsiebformer 20 ist an einem Gerüst 29 montiert, das wahlweise im Bereich einer Zuführung von weiteren Fasern oder einem Vlies 2a oberhalb eines Bandes 3 angeordnet sein kann. Je nach Ausführungsform des Rundsiebformers kann mit einer geänderten Bandführung die Schicht aus nassgelegten Fasern auch mit der Unterseite auf ein weiteres Transportband abgelegt werden, das dem umlaufenden Band 21 folgt.

In der Ausführungsform der Figur 2a ist der Zylinder 22 zumindest in einem Teilbereich auf dem Umfang besaugt, auf dem die nassgelegten Fasern 24 vom Stoffauflauf 23 auf den sich drehenden Zylinder übergeben werden und dann die Fasern vom Band 21 übernommen werden. In diesem Ausführungsbeispiel ist die Absaugung 22a innerhalb des Zylinders 22 ortsfest angeordnet und mehrstufig ausgeführt, die eine zentrale mittige Absaugung aufweisen kann und je eine beidseitig daneben angeordnete Absaugung mit verminderter Absaugleistung.

Damit dreht sich der Zylinder 22 um die ortsfeste Absaugung 22a. Alternativen sind möglich, beispielsweise eine gestufte Absaugung, die auf dem Umfang des Zylinders vom Stoffauflauf 23 zur Übergabe zum Band 21 kontinuierlich oder stufenweise abnehmen kann. Eine Gautschwalze 30 oberhalb des Bandes 21 kompaktiert die nassgelegten Fasern 24 und erhöht den Trockengehalt der Fasern 24. Alternativ kann statt der Gautschwalze 30 auch eine nicht näher dargestellte Saugvorrichtung überkopf oberhalb des Bandes 21 in dem Bereich angeordnet sein, an dem die nassgelegten Fasern 24 vom Zylinder 22 zum Band 21 überführt werden.

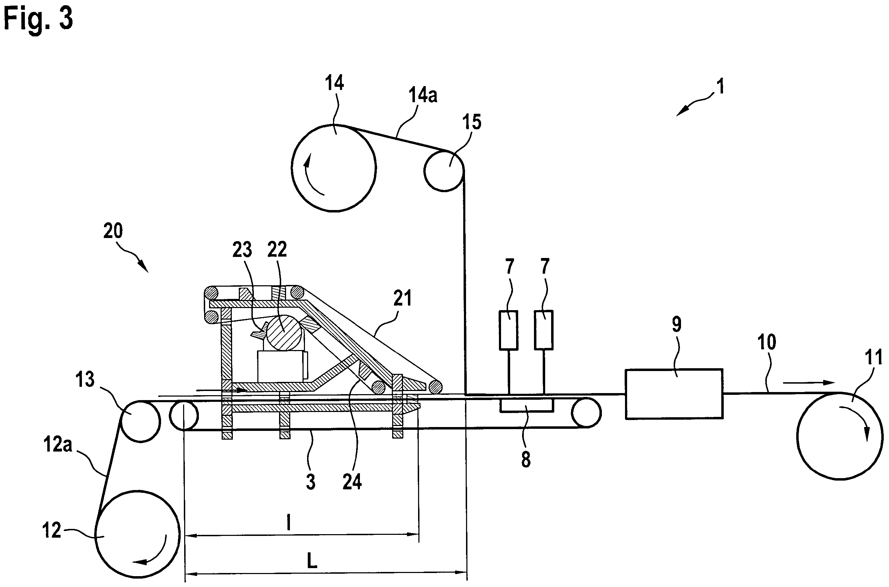

Figur 3 zeigt eine alternative Ausführungsform, bei der statt der Krempel 2 und/oder 6 aus Figur 1 auch ein oder zwei Vliese 12a, 14a von je einer Abwickelstation 12, 14 über eine Umlenkrolle 13, 15 abgewickelt in die Anlage 1 eingeleitet werden können. Beispielsweise kann das Vlies 12a, 14a jeweils ein Flächengewicht von 15 g/m² aufweisen. Bei einer Pulpmenge von 20 g/m², die durch den Rundsiebformer 20 verarbeitet wird, ergibt sich nach dem Trockner 9 ein leichtes mehrlagiges Vlies 10 von insgesamt 50 g/m². Das Vlies 10 kann vorzugsweise als biologisch abbaubares Produkt für den Hygiene- oder Kosmetikbereich verwendet werden. Alternativ können die Fasern des Vlieses 12a, 14a auch aus Lyocell, Baumwolle, Flachs, oder aus anderen nachwachsenden Rohstoffen bestehen. Insbesondere die Verwendung von Sekundärfasern, Regeneratfasern oder Recyclefasern erweitert das Einsatzspektrum der Anlage 1 zur Herstellung eines biologisch abbaubaren Vlieses, das mit einer Airlaid- oder Meltblownanlage nicht zu erreichen ist. Auch in diesem Ausführungsbeispiel beträgt der Abstand L zwischen den Auflagepunkten, an denen die Vliese 12a und 14a auf einem oder mehrere Bänder 3 aufgelegt werden und zwischen denen die Schicht aus nassgelegten Fasern 24 aufgebracht wird, maximal 25 m. Der Abstand I, zwischen dem Auflagepunkt eines Vlieses 12a auf einem oder mehreren Bändern 3 und dem in Transportrichtung nachfolgenden Auflagepunkt, an dem die nassgelegten Fasern 24 auf dem Vlies 12a aufgelegt werden, beträgt maximal 10 m. Es wird damit eine kurze und kompakte Anlage geschaffen, die durch die Verwendung eines klassischen Schrägsiebformers nicht zu erreichen ist. Ein weiterer Vorteil liegt darin, dass die Anlage nur mit einer Schicht nassgelegter Fasern 24, oder mit zwei Schichten (12a und 24) oder (24 und 14a) oder mit drei Schichten (12a und 24 und 14a) von Fasern bzw. Vliesen betrieben werden kann und bei ihrer Kompaktheit und den geringen Investitionskosten sehr günstig zu betreiben ist.

Die Verwendung des Rundsiebformers 20 bietet im Gegensatz zum Airlaid-Verfahren den Vorteil, dass die nassgelegten Fasern 24 mit zwei glatten bzw. ebenen Oberflächen weiterverarbeitet werden können, die durch den Zylinder 22 auf der Unterseite und durch das Band 21 auf der Oberseite der nassgelegten Fasern 24 geglättet werden. Aufgrund der geglätteten Oberflächen wird insbesondere bei leichten und dünnen nassgelegten Fasern eine gleichmäßige Materialverteilung bzw. ein gleichmäßiges Flächengewicht erzielt, das mit anderen Verfahren (Airlaid, Meltblown) nicht erreicht werden kann. Der Vorteil des Rundsiebformers 20 gegenüber dem klassischen Schrägsiebformer liegt in der Kompaktheit und den geringen Investitions- und Betriebskosten.

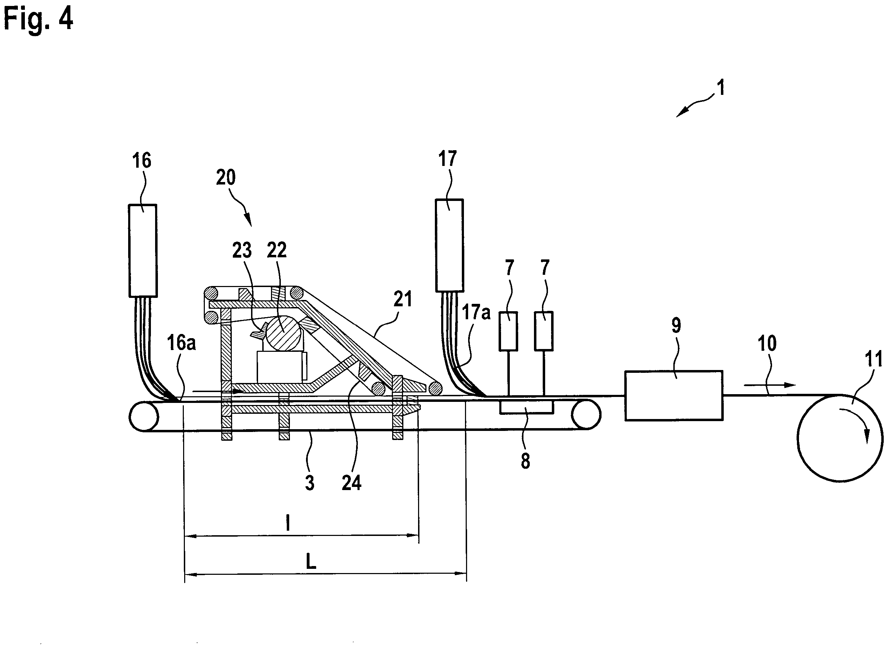

Die alternative Ausführungsform der Anlage nach Figur 4 zeigt eine weitere alternative Ausführungsform, bei der statt der Krempel 2 und/oder 6 aus Figur 1 und/oder der Abwickelstationen 12 und/oder 14 aus Figur 3 mindestens ein Vlies 16a oder 17a aus synthetischen Endlosfilamenten von mindestens einer Spinnvliesanlage 16, 17 bzw. Spunlaceturm abgezogen und in die Anlage 1 eingeleitet werden können. Beispielsweise kann das Vlies 16a, 17a jeweils ein Flächengewicht von 15 g/m² aufweisen. Bei einer Pulpmenge von 20 g/m², die durch den Rundsiebformer 20 verarbeitet wird, ergibt sich nach dem Trockner 9 ein leichtes mehrlagiges Vlies 10 von insgesamt 50 g/m². Das Vlies 10 kann mit der Lage aus nassgelegten Fasern 24 aus Pulp eine hohe Wasserrückhaltefähigkeit aufweisen und damit vorzugsweise für den Hygiene- oder Kosmetikbereich verwendet werden.

Auch in diesem Ausführungsbeispiel beträgt der Abstand L zwischen den Auflagepunkten, an denen die Vliese 16a und 17a auf einem oder mehrere Bänder 3 aufgelegt werden und zwischen denen die Schicht aus nassgelegten Fasern 24 aufgebracht wird, maximal 25 m. Der Abstand I, zwischen dem Auflagepunkt eines Vlieses 16a auf einem oder mehreren Bändern 3 und dem in Transportrichtung nachfolgenden Auflagepunkt, an dem die nassgelegten Fasern 24 auf dem Vlies 16a aufgelegt werden, beträgt maximal 10 m. Es wird damit eine kurze und kompakte Anlage geschaffen, die durch die Verwendung eines klassischen Schrägsiebformers nicht zu erreichen ist. Ein weiterer Vorteil liegt darin, dass die Anlage nur mit einer Schicht nassgelegter Fasern 24, oder mit zwei Schichten (16a und 24) oder (24 und 17a) oder mit drei Schichten (16a und 24 und 17a) von Fasern bzw. Vliesen betrieben werden kann und bei ihrer Kompaktheit und den geringen Investitionskosten sehr günstig zu betreiben ist.

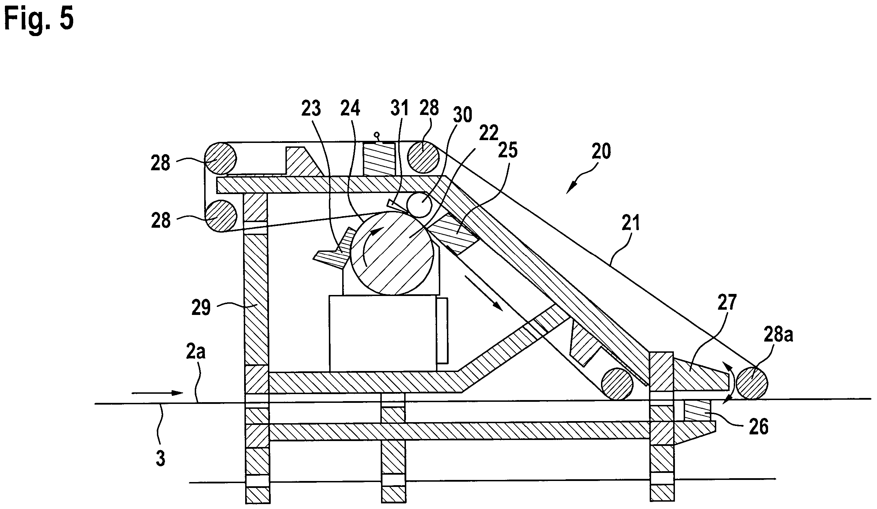

Das Ausführungsbeispiel der Figur 5 unterscheidet sich vom Ausführungsbeispiel der Figur 2 durch die Anordnung der Gautschwalze 30 in Transportrichtung vor dem Abnehmer, so dass eine Kompaktierung und Entwässerung vor dem Abnehmer 25 erfolgt, mit dem die nassgelegten Fasern 24 vom Zylinder auf das Band 21 übernommen werden. Vor der Gautschwalze 30 ist noch zusätzlich eine Saugvorrichtung 31 angeordnet, mit der unabhängig von der Bauart des Zylinders 22 (von innen besaugt oder nicht) Wasser aus der Faserstoffsuspension abgesaugt werden kann. Mit der verschwenkbaren Anordnung der Umlenkrolle 28a kann ein Winkel zwischen dem Band 21 und dem Band 3 eingestellt werden, was die Übergabe der nassgelegten Fasern 24 auf das Vlies 2a oder direkt auf das umlaufende Band 3 erleichtert. Zusätzlich kann über die Umlenkwalze 28a die Spannung des Bandes 21 eingestellt werden.

Die Ausführungsformen des Rundsiebformers 20 nach den Figuren 1 bis 6 sind insbesondere für eine Integration zwischen zwei Krempelanlagen 2, 6 bzw. zwischen zwei Abwickelstationen 12, 14 bzw. zwischen zwei Spinnvliesanlagen 16, 17 oder bei einer beliebigen Kombination der Anlagenkomponenten (Krempel, Abwickelstation, Spinnvlies) vorteilhaft, bei dem ein geringer Platzbedarf vorteilhaft ist. Dabei kann ein Vlies 2a, 12a, 16a unterhalb des Rundsiebformers 20 durchgeführt werden, wobei die nassgelegten Fasern 24 des Rundsiebformers 20 auf diesem Vlies 2a, 12a, 16a abgelegt werden können.

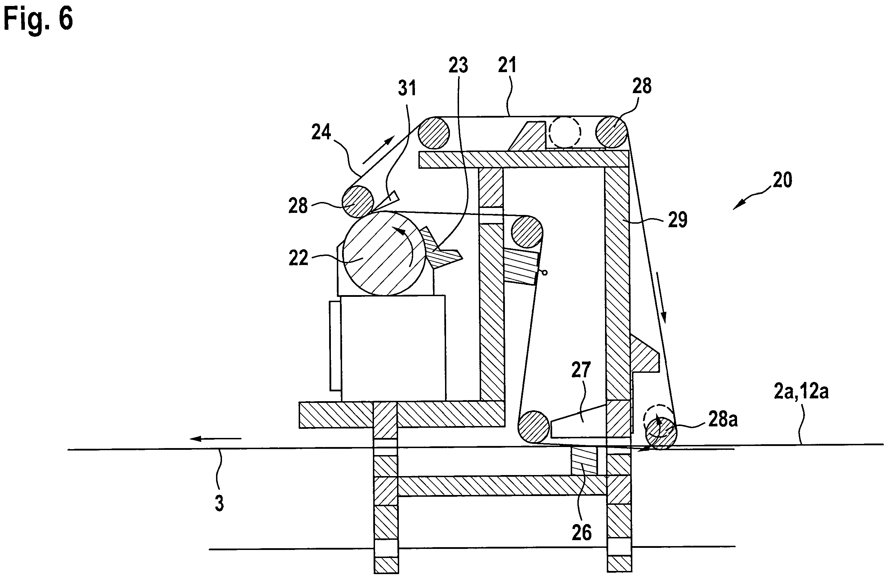

Figur 6 zeigt eine alternative Ausführungsform eines Rundsiebformers 20 mit einer anderen Blickrichtung bzw. Seitenansicht, bei der das Band 3 mit dem Vlies 2a von rechts nach links (Transportrichtung) transportiert wird. Diese Ausführungsform ist sehr kompakt gebaut, da das Band 21 des Rundsiebformers 20 überwiegend vertikal angeordnet ist. Eine Faserstoffsuspension wird mittels Stoffauflauf 23 auf einem angetriebenen drehenden Zylinder 22 abgelegt. Der Zylinder 22 kann vorzugsweise einen perforierten Mantel aufweisen und darüber das Wasser der Faserstoffsuspension abführen. Hierzu kann der gesamte Zylinder 22 unter leichtem Unterdruck stehen und einen Abfluss für das abgeführte Wasser aufweisen. Ergänzend kann der Zylinder 22 auch zumindest in dem Teilbereich auf dem Umfang besaugt werden, auf dem das Band 21 aufliegt. Das umlaufende Band 21, das als Siebband ausgebildet sein kann, wird um mehrere Umlenkrollen 28 geführt und liegt mit einer äußeren Seite auf einem Teilumfang des Zylinders 22 mit Spannung auf, so dass das Wasser aus der Faserstoffsuspension gepresst wird. Eine Absaugung 31 in Form eines Schnabelsaugers saugt zumindest einen Teil der Flüssigkeit durch das umlaufende Band 21 ab. Anstelle einer Gautschwalze aus der Figur 5 wird mittels einer Umlenkrolle 28 das Band 21 mit den nassgelegten Fasern 24 von einer kopfüber Position in eine schräg aufliegende Position transportiert. Die Umlenkrolle 28 kann mittels Verstelleinrichtung so ausgebildet sein, dass im Bereich der Umlenkung der nassgelegten Fasern gleichzeitig eine Kompaktierung und weitere Entwässerung erfolgt. Mindestens eine Umlenkrolle 28a kann als Spannrolle ausgeführt werden, mit dem sich das umlaufende Band 21 spannen lässt. Der Zylinder 22 und das Band 21 drehen bzw. bewegen sich vorzugsweise mit der gleichen Geschwindigkeit. Die Fasern 24 werden damit kopfüber mit ihrer Oberseite vom Band 21 in Richtung einer Umlenkrolle 28 transportiert, so dass die nassgelegten Fasern 24 mit ihrer Unterseite um fast 180° nach oben gedreht werden. Mittels einer weiteren Umlenkrolle 28 werden die Fasern 24 fast senkrecht nach unten transportiert und im Bereich einer einstellbaren bzw. verschwenkbaren Umlenkrolle 28a auf einem umlaufenden Band 3 oder einem Vlies 2a, 12a abgelegt. Das Vlies 2a, 12a kann durch ein Band 3 vollständig unter dem Gerüst 29 des Rundsiebformers 20 durchgeführt werden. Im Bereich der Übergabe der Fasern 24 auf das Vlies 2a ist am Rundsiebformer 20 ein Trennsauger 26 angeordnet, mit dem die Fasern vom Band 21 abgelöst werden. Der Trennsauger 26 ist dabei unterhalb des umlaufenden Bandes 3 angeordnet und kann dabei gleichzeitig das Vlies 2a, 12a durchströmen. Auf der Gegenseite des Bandes 21, also auf der Innenseite des Bandes 21, kann zur Verstärkung des Ablöseeffektes der Fasern 24 vom Band 21 eine Druckvorrichtung 27 angeordnet sein, die mittels Luft- oder Wasserdruck die Fasern 24 vom Band 21 ablösen. Vorzugsweise ist eine Umlenkrolle 28a ausgebildet, in der Position verstellt zu werden, so dass im Übergabebereich der nassgelegten Fasern 24 auf das Vlies 2a zwischen den Bändern 3 und 21 in Transportrichtung ein offener Winkel entsteht, mit dem die Ablösung der nassgelegten Fasern 24 vom Band 21 unterstützt wird. Durch die Verschwenkbarkeit der Umlenkrolle 28a wird gleichzeitig die Durchführung des Vlieses 2a, 12a, 16a unter dem Rundsiebformer erleichtert.

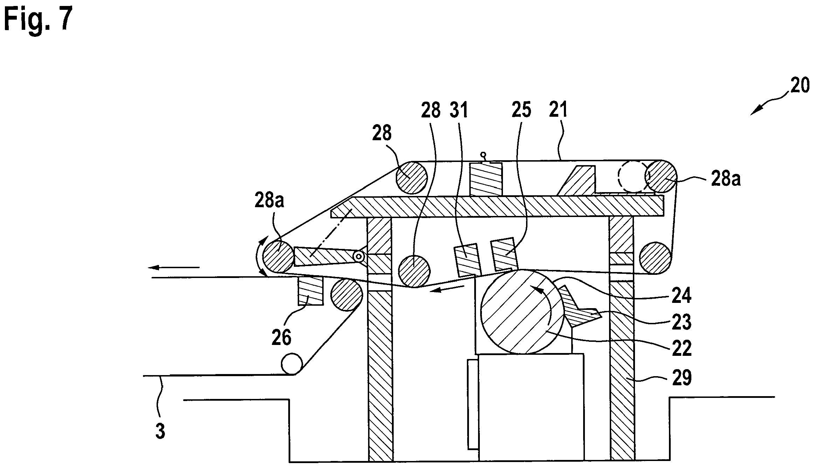

Figur 7 zeigt eine weitere Ausführungsform eines Rundsiebformers 20 mit einer anderen Blickrichtung bzw. Seitenansicht, bei der der Rundsiebformer 20 in Transportrichtung der nassgelegten Fasern 24 vor einem umlaufenden Band 3 angeordnet ist. Beispielhaft ist diese Anordnung zumindest teilweise Unterflur angeordnet, so dass die vom Rundsiebformer 20 erzeugten nassgelegten Fasern 24 annähernd horizontal auf ein umlaufendes Band 3 transportiert werden können. Eine Faserstoffsuspension wird mittels Stoffauflauf 23 auf einem angetriebenen drehenden Zylinder 22 abgelegt. Der Zylinder 22 kann vorzugsweise einen perforierten Mantel aufweisen und darüber das Wasser der Faserstoffsuspension abführen. Hierzu kann der gesamte Zylinder 22 unter leichtem Unterdruck stehen und einen Abfluss für das abgeführte Wasser aufweisen. Ergänzend kann der Zylinder 22 auch zumindest in dem Teilbereich auf dem Umfang besaugt werden, auf dem das Band 21 aufliegt. Das umlaufende Band 21, das als Siebband ausgebildet sein kann, wird um mehrere Umlenkrollen 28 geführt und liegt mit einer äußeren Seite auf einem Teilumfang des Zylinders 22 mit Spannung auf, so dass das Wasser aus der Faserstoffsuspension gepresst wird. Ein Abnehmer 25 und eine nachfolgende Absaugung 31 sind ausgebildet, die nassgelegten Fasern 24 vom Zylinder 22 abzunehmen und mit der Oberseite der nassgelegten Fasern 24 am Band 21 zu halten. Dabei kann zumindest ein Teil der Flüssigkeit durch das umlaufende Band 21 abgesaugt werden. Eine weitere Umlenkrolle 28 ist ausgebildet, das Band 21 derart umzulenken, dass mittels einer weiteren Umlenkrolle des umlaufenden Bandes 3 eine leichte Kompaktierung der nassgelegten Fasern 24 erfolgt. Im Übergabebereich der nassgelegten Fasern vom Band 21 auf das umlaufende Band 3 kann ein Trennsauger 26 angeordnet sein, mit dem die nassgelegten Fasern 24 mit ihrer Unterseite auf das Band 3 abgelegt werden. Vorzugsweise ist eine Umlenkrolle 28a ausgebildet, in der Position verstellt zu werden, so dass im Übergabebereich der nassgelegten Fasern 24 auf das Band 3 zwischen den Bändern 3 und 21 in Transportrichtung ein offener Winkel entsteht, mit dem die Ablösung der nassgelegten Fasern 24 vom Band 21 unterstützt wird. Nicht dargestellt kann in Transportrichtung mindestens ein Vlies 2a, 6a, 12a, 14a, 16a, 17a von unterhalb oder oberhalb des Bandes 3 zugeführt werden, um mittels Wasserstrahlverfestigung mit den nassgelegten Fasern 24 verbunden zu werden.

Alle Ausführungsvarianten des Rundsiebformers können beliebig entsprechend den Anwendungsfällen miteinander kombiniert werden. Der Rundsiebformer 20 ist für eine Flächenmasse von 10 bis 50 g/m² geeignet. Die Arbeitsgeschwindigkeit kann von 50 bis 400 m/min betragen. Die maximale Arbeitsbreite kann bis zu 5 m betragen. Die anschließende Verfestigung der einen Lage nassgelegter Fasern 24 oder mehrerer Lagen Vlies mit den nassgelegten Fasern 24 für alle Anwendungsfälle der Figuren 1 bis 7 kann mit einem oder mehreren Balken einer Wasserstrahlverfestigung 7 von 40 bis 400 bar Druck erfolgen

Die Schicht aus nassgelegten Fasern kann zumindest teilweise aus kurzen synthetischen Fasern mit einer Faserlänge von 1 bis 3 mm bestehen, vorzugsweise von 1 bis 12 mm wie beispielsweise Polyester, Polyamid, Polypropylen oder Polyolefin bestehen. Auch Fasermischungen aus synthetischen und natürlichen Fasern sind möglich. Ebenso kann die Schicht aus nassgelegten Fasern aus 100 % Pulp oder anderen natürlichen Fasern bestehen, die ein hohes Wasserrückhaltevermögen aufweisen, und vorzugsweise biologisch abbaubar sind. Die Verwendung von Sekundärfasern, Recyclefasern oder Regeneratfasern ist für die Herstellung von biologisch abbaubaren Fasern vorteilhaft.

Die Fasersuspension kann aus einer Mischung von Fasern mit einem hohen Anteil Pulp und einem kleineren Anteil aus kurzen synthetischen Fasern mit einer Faserlänge von 1 bis 3 mm, vorzugsweise von 1 bis 12 mm wie beispielsweise Polyester, Polyamid, Polyolefin, Polypropylen oder Viskose oder Lyocell bestehen. Das Flächengewicht des getrockneten Vlieses 10 kann vorzugsweise 20 bis 70 g/m² betragen.

Je nach Ausführungsform kann das Vlies 12a, 14a beispielsweise aus Polyester, Viskose, einer Baumwollmischung oder einer Mischung aus synthetischen und/oder natürlichen Fasern bestehen, beispielsweise können auch ein oder beide Vliese 12a, 14a aus Tissue bzw. Papier verwendet werden. Vorzugsweise beträgt das Flächengewicht des Vlieses 10 zwischen 20 bis 70 g/m². Die Fasern der Vliese 12a, 14a können aus kurzen Fasern, beispielsweise aus Stapelfasern mit einer Länge von 3 bis 60 mm bestehen, oder aus synthetischen Endlosfilamenten.

Es ergibt sich erfindungsgemäß eine sehr kompakte und flexible Anlage zur Herstellung eines ein- oder mehrlagigen Vlieses 10, das nur aus der Bahn aus nassgelegten Fasern 24 bestehen kann, oder nur aus dem Krempelvlies 2a mit oder ohne dem Krempelvlies 6a. Alternativ kann das Vlies 10 aus zwei oder mehr Lagen bestehen, beispielsweise aus den nassgelegten Fasern 24 mit einem oder zwei Vliesen 2a, 6a der Krempeln 2 und/oder 6, oder aus den nassgelegten Fasern 24 mit den Vliesen 12a und/oder 14a und/oder einem weiteren Vlies 16a und/oder 17a einer Spinnvliesanlage 16 und/oder 17.

### Bezugszeichen

- 1: Anlage
- 2: Krempel
- 2a: Vlies
- 3: Band
- 6: Krempel
- 6a: Vlies
- 7: Wasserstrahlverfestigung
- 8: Absaugung
- 9: Trockner
- 10: mehrlagiges Vlies
- 11: Wickler
- 12: Abwickelstation
- 12a: Vlies
- 13: Umlenkrolle
- 14: Abwickelstation
- 14a: Vlies
- 15: Umlenkrolle
- 16: Spinnvliesanlage
- 16a: Spinnvlies
- 17: Spinnvliesanlage
- 17a: Spinnvlies
- 20: Rundsiebformer
- 21: Band
- 22: Zylinder
- 22a: Absaugung
- 23: Stoffauflauf
- 24: nassgelegte Fasern
- 25: Abnehmer
- 26: Trennsauger
- 27: Druckvorrichtung
- 28, 28a: Umlenkrollen
- 29: Gerüst
- 30: Gautschwalze
- 31: Absaugung
- l: Länge
- L: Länge

## Patentansprüche

1. Anlage zur Herstellung eines mehrlagigen Vlieses, umfassend mindestens eine Vorrichtung (2) zum Herstellen und/oder Ablegen eines ersten Vlieses (2a) auf einem umlaufenden Band (3), wobei in Materialtransportrichtung nachfolgend eine Vorrichtung angeordnet ist, die ausgebildet ist, eine Lage nassgelegter Fasern auf dem ersten Vlies aufzubringen, die als Rundsiebformer (20) ausgebildet ist, von dem die nassgelegten Fasern (24) mit ihrer Oberseite vom umlaufenden Band (21) in Richtung umlaufendes Band (3) transportiert werden, wobei in Materialtransportrichtung eine Vorrichtung zur Verfestigung (7) und/oder Verbindung des ersten Vliese mit der Lage nassgelegter Fasern angeordnet ist, wobei zwischen den Ablagepunkten des ersten Vlieses (2a) auf dem umlaufenden Band (3) und dem Ablagepunkt der Lage nassgelegter Fasern (24) auf dem ersten Vlies der Abstand I maximal 10 m beträgt.

2. Anlage zur Herstellung eines mehrlagigen Vlieses, umfassend mindestens eine Vorrichtung (2) zum Herstellen und/oder Ablegen eines ersten Vlieses (2a) auf einem umlaufenden Band (3), wobei nachfolgend in Materialtransportrichtung eine weitere Vorrichtung (6) zum Herstellen und/oder Ablegen eines weiteres Vlieses (6a) auf einem umlaufenden Band (3) angeordnet ist, wobei zwischen den Vorrichtungen zum Herstellen und/oder Ablegen des ersten (2a) und des zweiten Vlieses (6a) eine Vorrichtung zur Herstellung einer Lage nassgelegter Fasern (24) angeordnet ist, die zwischen dem ersten und dem weiteren Vlies auf einem umlaufenden Band (21) abgelegt werden, wobei die Vorrichtung zur Herstellung der Lage aus nassgelegten Fasern als Rundsiebformer (20) ausgebildet ist, von dem die nassgelegten Fasern (24) mit ihrer Oberseite vom umlaufenden Band (21) in Richtung umlaufendes Band (3) transportiert werden, und dass der Abstand L zwischen dem Ablagepunkt des ersten Vlieses auf dem umlaufenden Band und dem Ablagepunkt des zweiten Vlieses auf der Lage nassgelegter Fasern maximal 25 m beträgt.

3. Anlage zur Herstellung eines mehrlagigen Vlieses nach Anspruch 1 oder 2, **dadurch gekennzeichnet, dass** die Vorrichtung zur Herstellung des ersten Vlieses als Krempel, als Abwickelstation oder als Spinnvliesanlage ausgebildet ist.

4. Anlage zur Herstellung eines mehrlagigen Vlieses nach Anspruch 2, **dadurch gekennzeichnet, dass** die Vorrichtung zur Herstellung des zweiten Vlieses als Krempel, als Abwickelstation oder als Spinnvliesanlage ausgebildet ist.

5. Verfahren zur Herstellung eines Vlieses, bei dem eine Faserstoffsuspension auf einem rotierenden Zylinder (22) abgelegt wird, der ausgebildet ist, zumindest einen Teil der Flüssigkeit der Faserstoffsuspension abzuziehen, so dass eine Lage nassgelegter Fasern (24) entsteht, das an der Oberseite mittels eines umlaufenden Bandes (21) erfasst und an ein weiteres umlaufendes Band (3) der Anlage übergeben wird, wobei die Lage nassgelegter Fasern alleine oder mit mindestens einem weiteren Vlies zusammen verfestigt und getrocknet wird, wobei die Lage nassgelegter Fasern zwischen dem Zylinder und dem umlaufenden Band kompaktiert wird, **dadurch gekennzeichnet, dass** die Lage nassgelegter Fasern auf einem ersten Vlies abgelegt wird, das auf dem weiteren umlaufenden Band transportiert wird.

6. Verfahren nach Anspruch 5, **dadurch gekennzeichnet, dass** die Lage nassgelegter Fasern vor dem Verfestigen durch ein weiteres Vlies abgedeckt wird.

7. Verfahren nach Anspruch 5, **dadurch gekennzeichnet, dass** die Lage nassgelegter Fasern aus biologisch abbaubaren Fasern mit einem Flächengewicht von 10 - 50 g/m² besteht.

## Claims

1. Installation for producing a multilayer web, comprising at least one device (2) for producing and/or depositing a first web (2a) on a circulating belt (3), wherein, in material transport direction, a device is arranged downstream, which is configured to apply a layer of wet-laid fibres onto the first web, said device being configured as a cylinder mould former (20), from which the wet-laid fibres (24) are transported with their upper side from the circulating belt (21) towards the circulating belt (3), wherein, in material transport direction, a device (7) for entangling and/or bonding the first web with the layer of wet-laid fibres is arranged, wherein the distance I between the deposition points of the first web (2a) on the circulating belt (3) and the deposition point of the layer of wet-laid fibres (24) on the first web is a maximum of 10 m.

2. Installation for producing a multilayer web, comprising at least one device (2) for producing and/or depositing a first web (2a) on a circulating belt (3), wherein, in material transport direction, another device (6) for producing and/or depositing another web (6a) on a circulating belt (3) is arranged downstream, wherein, between the devices for producing and/or depositing a first web (2a) and a second web (6a), a device for producing a layer of wet-laid fibres (24) is arranged, which are deposited between the first and the other web on a circulating belt (21), wherein the device for producing a layer of wet-laid fibres is configured as a cylinder mould former (20), from which the wet-laid fibres (24) are transported with their upper side from the circulating belt (21) towards the circulating belt (3), and wherein the distance L between the deposition point for the first web on the circulating belt and the deposition point of the second web on the layer of wet-laid fibres is a maximum of 25 m.

3. Installation for producing a multilayer web according to claim 1 or 2, **characterised in that** the device for producing the first web is configured as a roller card, wind-up station, or nonwoven fabric system.

4. Installation for producing a multilayer web according to claim 2, **characterised in that** the device for producing the second web is configured as a roller card, wind-up station, or nonwoven fabric system.

5. Method for producing a web, whereby a fibre material suspension is deposited on a rotating cylinder (22), which is configured to remove at least some of the liquid from the fibre material suspension, such that a layer of wet-laid fibres (24) is formed, which is captured on the upper side using a circulating belt (21) and transferred to another circulating belt (3) of the installation, wherein the layer of wet-laid fibres is entangled and dried either alone or together with at least one more web, wherein the layer of wet-laid fibres is compacted between the cylinder and the circulating belt, **characterised in that** the layer of wet-laid fibres is deposited on a first web which is transported on the other circulating belt.

6. Method according to claim 5, **characterised in that** the layer of wet-laid fibres is covered by a second web before entangling.

7. Method according to claim 5, **characterised in that** the layer of wet-laid fibres consists of biodegradable fibres with an area mass of 10-50g/m².

## Revendications

1. Installation pour la fabrication d'une nappe multicouches, comprenant au moins un dispositif (2) servant à fabriquer et/ou déposer une première nappe (2a) sur une bande (3) circulant en circuit fermé, sachant que dans la direction de transport-matière est disposé en aval un dispositif configuré pour appliquer une couche de fibres déposées mouillées sur la première nappe qui est configurée en dispositif filtrant de forme ronde (20) depuis lequel le côté supérieur des fibres déposées mouillées (24) est transporté de la bande (21) circulant en circuit fermé en direction de la bande (3) circulant en circuit fermé, sachant que dans la direction de transport-matière est disposé un dispositif servant à consolider (7) et/ou relier la première nappe avec la couche de fibres déposées mouillées, sachant que - entre les points de déposition de la première nappe (2a) sur la bande (3) circulant en circuit fermé et le point de déposition de la couche de fibres déposées mouillées (24) sur la première nappe - l'écart I est d'au maximum 10 m.

2. Installation pour la fabrication d'une nappe multicouches, comprenant au moins un dispositif (2) servant à fabriquer et/ou déposer une première nappe (2a) sur une bande (3) circulant en circuit fermé, sachant qu'en aval dans la direction de transport-matière est disposé un autre dispositif (6) servant à fabriquer et/ou déposer une autre nappe (6a) sur une bande (3) circulant en circuit fermé, sachant qu'entre les dispositifs servant à fabriquer et/ou déposer la première (2a) et la deuxième (6a) nappes est disposé un dispositif servant à fabriquer une couche de fibres déposées mouillées (24), qui sont déposées entre la première nappe et l'autre nappe sur une bande (21) circulant en circuit fermé, sachant que le dispositif servant à fabriquer la couche de fibres déposées mouillées est configuré en dispositif filtrant de forme ronde (20) depuis lequel le côté supérieur des fibres déposées mouillées (24) est transporté de la bande (21) circulant en circuit fermé en direction de la bande (3) circulant en circuit fermé, et que l'écart L entre le point de déposition de la première nappe sur la bande circulant en circuit fermé et le point de déposition de la deuxième nappe sur la couche de fibres déposées mouillées est d'au maximum 25 m.

3. Installation pour la fabrication d'une nappe multicouches selon la revendication 1 ou 2, **caractérisée en ce que** le dispositif servant à la fabrication de la première nappe est configuré comme carde à rouleaux, comme poste de déroulement ou comme installation pour non-tissés.

4. Installation pour la fabrication d'une nappe multicouches selon la revendication 2, **caractérisée en ce que** le dispositif servant à la fabrication de la deuxième nappe est configuré comme carde à rouleaux, comme poste de déroulement ou comme installation pour non-tissés.

5. Procédé pour la fabrication d'une nappe au cours duquel une suspension contenant de la matière fibreuse est déposée sur un cylindre tournant (22) qui est configuré pour retirer au moins une partie du liquide de la suspension contenant la matière fibreuse, de sorte que se forme une couche de fibres déposées mouillées (24), couche dont le côté supérieur est saisi au moyen d'une bande (21) circulant en circuit fermé et est ensuite transmis à une autre bande (3) circulant en circuit fermé de l'installation, sachant que la couche de fibres déposées mouillées est consolidée et séchée seule ou au moins conjointement avec une autre nappe, sachant que la couche de fibres déposées mouillées est compactée entre le cylindre et la bande circulant en circuit fermé, **caractérisé en ce que** la couche de fibres déposées mouillées est déposée sur une première nappe qui est transportée sur l'autre bande circulant en circuit fermé.

6. Procédé selon la revendication 5, **caractérisé en ce que** la couche de fibres déposées mouillées est recouverte, avant la consolidation, par une autre nappe.

7. Procédé selon la revendication 5, **caractérisé en ce que** la couche de fibres déposées mouillées se compose de fibres biodégradables d'un grammage compris entre 10 et 50 g/m².
